# FASCICULE DE BREVET EUROPEEN

(11) **EP 1 633 997 B1**
(45) Date de publication et mention de la délivrance du brevet: **07.02.2007**
(21) Numéro de dépôt: 04785720.6
(22) Date de dépôt: 16.06.2004
(51) Int. Cl.: F16H 45/02, F16D 69/00, F16D 13/72

(54) **APPAREIL D 'ACCOUPLEMENT HYDROCINETIQUE, NOTAMMENT POUR VEHICULE AUTOMOBILE**
HYDROKINETISCHE KUPPLUNGSVORRICHTUNG BEISPIELSWEISE FÜR EIN KRAFTFAHRZEUG
HYDROKINETIC COUPLING DEVICE WHICH IS INTENDED, FOR EXAMPLE, FOR A MOTOR VEHICLE

(30) Priorité: 17.06.2003 FR 0307304
(43) Date de publication de la demande: 15.03.2006
(73) Titulaire: VALEO EMBRAYAGES, 80009 Amiens (FR)
(72) Inventeur: VERHOOG, Roël, F-60190 GOURNAY SUR ARONDE (FR)
(74) Mandataire: Vignesoult, Serge L. M.
(86) Numéro de dépôt international: PCT/FR2004/050224
(87) Numéro de publication internationale: WO 2005/001313

(56) Documents cités:
- EP-A- 1 152 160
- WO-A-93/13339
- FR-A- 2 715 448
- FR-A- 2 783 298
- US-A- 5 878 860
- US-A- 6 145 645
- US-A1- 2002 046 912
- US-B1- 6 247 568

## Description

La présente invention concerne un appareil d'accouplement hydrocinétique, notamment pour véhicule automobile et une garniture de friction pour un tel appareil.

La présente invention concerne plus particulièrement un appareil d'accouplement hydrocinétique du type comportant :
- un carter contenant de l'huile, qui comporte une paroi sensiblement transversale comprenant une portée de frottement et qui est propre à être lié en rotation à un arbre menant,
- une roue de turbine destinée à être liée en rotation à un arbre mené,
- un embrayage de verrouillage du couplage des arbres menant et mené, intervenant entre la roue de turbine et la paroi transversale du carter, qui comporte un piston comprenant une portée de frottement pour lier de manière débrayable la roue de turbine à la paroi transversale,
- au moins une garniture annulaire de friction qui est interposée axialement entre la portée de frottement du carter et la portée de frottement du piston et dont au moins une face latérale de frottement comporte un réseau de rainures de refroidissement des portées de frottement.

Les portées du carter et du piston sont des portées de frottement réalisées sous la forme de pistes annulaires centrées autour de l'axe de rotation de l'appareil, qui sont prévues pour serrer axialement au moins une garniture de friction.

Selon des conceptions connues, le nombre de garnitures de friction varie en fonction du type d'appareil d'accouplement hydrocinétique.

Ainsi, les appareils de type « monoface » comportent une seule garniture de friction qui est généralement portée par le piston de l'embrayage de verrouillage et qui est propre à être serrée par ce dernier contre la portée de frottement de la paroi transversale de carter pour réaliser le pontage, c'est-à-dire l'accouplement des arbres menant et mené.

Un tel appareil d'accouplement hydrocinétique est par exemple décrit dans le document FR-A-2.802.265.

Les appareils de type « bifaces », comme décrits dans les documents WO-A-94/07058 ou WO-A-93/13339, qui décrit un appareil comprenant toutes les caractéristiques du préambule de l'objet des revendications indépendantes 1 et 2, comportent au moins un disque de friction qui est interposé axialement entre un piston et la paroi transversale de carter et dont chaque face porte une garniture de friction destinée à coopérer avec une portée de frottement située en vis-à-vis, telle que les portées de frottement du piston et de la paroi du carter.

En faisant varier la pression d'huile de part et d'autre du piston, on déplace celui-ci axialement dans un sens ou dans l'autre, en vue de lier la roue de turbine à la paroi transversale du carter de manière débrayable.

Dans un tel appareil, le disque de friction est par exemple doté à sa périphérie externe de pattes s'étendant au-dessus du piston pour engrener avec une pièce d'entrée d'un amortisseur de torsion, comprenant une pièce de sortie dotée d'un voile lié au moyeu.

Des organes élastiques à action circonférentielle agissent entre les pièces d'entrée et de sortie conformées pour recevoir les organes élastiques, qui s'étendent radialement au-dessus du piston et des portées.

Quel que soit le type d'appareil d'accouplement hydrocinétique on a constaté que, au cours du fonctionnement, la température de la ou des portées de frottement augmente fortement, pouvant atteindre des valeurs de l'ordre de 200°C à 250°C, soit généralement une température plus élevée que la température maximale acceptable pour l'huile. En effet au-delà d'une température d'environ 160°C, l'huile se dégrade généralement de manière irréversible.

C'est la raison pour laquelle on a déjà proposé de réaliser, dans les faces latérales de frottement de la garniture de friction, des rainures de refroidissement du type de celles représentées dans les documents FR-A-2.804.484 ou FR-A-2.734.038 auxquels on pourra se reporter pour plus de précisions.

Cependant, le refroidissement des portées de frottement obtenu avec des garnitures de friction dont les faces de frottement comportent de tels réseaux de rainures de refroidissement n'est pas toujours satisfaisant.

Ainsi, on a notamment pu constater des différences de températures à la surface des portées de frottement refroidies par un tel réseau de rainures de sorte que, le refroidissement n'étant pas homogène, il existe localement des zones dans lesquelles la température excède une valeur donnée fonction de l'application.

La différence de température entre deux points distants radialement d'une portée de frottement peut par exemple atteindre des valeurs allant jusqu'à 60°C pendant le fonctionnement en glissement contrôlé, c'est à dire lorsqu'il y a un contact dynamique de frottement entre une portée et la face d'une garniture de friction.

Le glissement contrôlé est obtenu en contrôlant la pression différentielle s'exerçant de part et d'autre du piston.

Pour certains régimes du moteur du véhicule, on peut ainsi faire glisser ou patiner le disque de friction portant les garnitures afin de mieux filtrer les vibrations.

Toutefois, un tel glissement conduit à un échauffement au niveau des portées de frottement, et donc aussi à celui de l'huile contenue dans l'appareil d'accouplement hydrocinétique.

Or pour garantir un bon fonctionnement, il est souhaitable que la température de l'huile ne dépasse une valeur maximale donnée, par exemple de l'ordre de 160°C.

En effet, cet échauffement des éléments de l'appareil d'accouplement hydrocinétique provoque notamment une dégradation des propriétés de l'huile et des garnitures de frottement, et il peut donc être à l'origine de dysfonctionnements de l'appareil, comme l'apparition de « broutement ».

Dans le but de résoudre ces problèmes, et plus particulièrement de remédier aux inconvénients qui viennent d'être évoqués, l'invention propose un appareil d'accouplement hydrocinétique du type mentionné précédemment, caractérisé en ce que le réseau de rainures comporte au moins deux rainures de refroidissement comportant chacune au moins un tronçon circulaire de refroidissement qui est centré autour de l'axe de rotation de l'appareil et dont le rayon a une valeur, comprise entre celle du bord interne et celle du bord externe dé la face de frottement, qui est déterminée de manière à obtenir un refroidissement surfacique homogène de la portée de frottement en vis-à-vis.

Selon la revendication 1, l'invention propose un appareil d'accouplement hydrocinétique où au moins une garniture annulaire de friction qui est interposée axialement entre la portée de frottement du carter et la portée de frottement du piston et dont au moins une face latérale de frottement présente un rayon moyen (Rm) et comporte un réseau de rainures de refroidissement des portées de frottement, chaque rainure de refroidissement présentant une surface de refroidissement, où le réseau de rainures comportant au moins deux rainures de refroidissement est agencé de sorte qu'une somme des valeurs de surfaces de refroidissement situées radialement entre le rayon moyen (Rm) et un bord externe de la face de frottement soit plus importante qu'une somme des valeurs de surfaces de refroidissement situées radialement entre un bord interne de la face de frottement et le rayon moyen (Rm).

Selon un mode préféré de l'invention les rainures sont de largeur constante et sont agencées de sorte que la somme des longueurs des rainures situées radialement entre le rayon moyen (Rm) et un bord externe de la face de frottement soit plus importante que la somme des longueurs des rainures situées radialement entre un bord interne de la face de frottement et le rayon moyen (Rm).

Grâce à l'invention, on réduit notamment la température maximale sur la portée du carter et la température maximale de l'huile.

Avantageusement, on augmente aussi les capacités en glissement contrôlé par une évacuation mieux répartie de la chaleur produite par les phénomènes de friction.

Grâce à l'invention, les rainures de refroidissement créent un effet d'entraînement de l'huile par cisaillement visqueux et on obtient une circulation plus ou moins rapide de l'huile qui est fonction de différents paramètres.

De plus, le réseau de rainures permet d'obtenir un refroidissement sans diminuer le couple transmis par l'embrayage de verrouillage du couplage des arbres menant et mené.

La diminution des échauffements permet d'augmenter la longévité de l'embrayage de verrouillage et de la boîte de vitesse du véhicule, grâce à une meilleure conservation de l'huile.

Selon d'autres caractéristiques de l'invention :
- chaque tronçon circulaire de refroidissement d'une rainure de refroidissement présente une valeur de rayon (Rn) différente du tronçon circulaire de refroidissement de la rainure consécutive ;
- les valeurs des rayons (Rn) des tronçons circulaires des rainures de refroidissement sont déterminées de manière que la moyenne des valeurs des rayons (Rn) de l'ensemble des tronçons circulaires que comporte la face de frottement de la garniture soit supérieure ou égale à la valeur du rayon moyen (Rm) de cette garniture annulaire de friction ;
- les tronçons circulaires de refroidissement s'étendent sur des secteurs angulaires d'angle au centre (α) égaux ;
- au moins une des rainures de refroidissement comporte au moins un premier tronçon circulaire et un second tronçon circulaire de refroidissement de longueurs « Ln » non égales ;
- le réseau de rainures comporte un nombre (n) de rainures de refroidissement qui sont réparties circonférentiellement de manière régulière sur la face de frottement de la garniture de friction ;
- le nombre (n) de rainures de refroidissement est un nombre pair ;
- chaque rainure de refroidissement comporte un tronçon intérieur de raccordement qui relie une extrémité circonférentielle d'un tronçon circulaire de refroidissement au bord interne de la garniture annulaire de friction et un tronçon extérieur de raccordement qui relie l'autre extrémité circonférentielle du tronçon circulaire de refroidissement au bord externe de la garniture annulaire de friction ;
- le tronçon intérieur de raccordement et/ou le tronçon extérieur de raccordement sont globalement rectilignes;
- le tronçon intérieur de raccordement et/ou le tronçon extérieur de raccordement s'étendent globalement radialement suivant un rayon centré sur l'axe (X) de manière à former un angle aigu compris entre 0° et 45° par rapport à ce rayon ;
- à un tronçon extérieur de raccordement d'une rainure de refroidissement succède pour la rainure de refroidissement consécutive un tronçon intérieur de raccordement ou un tronçon extérieur de raccordement ;
- une rainure de refroidissement parcourue radialement de l'intérieur vers l'extérieur est dite « positive » si l'huile circule dans le tronçon circulaire suivant le sens de rotation (F) de la garniture et est dite « négative » si elle circule en sens inverse et en ce que le réseau comporte autant de rainure de refroidissement « positive » que de rainure « négative » ;
- une rainure de refroidissement parcourue radialement de l'intérieur vers l'extérieur est dite « positive » si l'huile circule dans le tronçon circulaire suivant le sens de rotation (F) de la garniture et est dite « négative » si elle circule en sens inverse et en ce que le réseau comporte plus de rainures de refroidissement « positives » que « négatives » ou réciproquement ;
- la garniture annulaire de friction est constituée d'au moins deux pièces formant des secteurs qui sont montées solidaires en rotation ;
- les rainures de refroidissement sont réalisées de manière à ne pas s'étendre sur deux secteurs consécutifs ;
- chaque rainure de refroidissement est constituée à la faveur d'un jeu délimité après assemblage entre deux bords radiaux de formes complémentaires appartenant chacun à une des deux pièces adjacentes ;
- le bord interne de la garniture de friction comporte des moyens de centrage tels que des encoches.

D'autres caractéristiques et avantages de l'invention apparaîtront à la lecture de la description détaillée qui va suivre, pour la compréhension de laquelle on se reportera aux figures annexées dans lesquelles :
- la figure 1 est une demi-vue schématique partielle en coupe axiale qui illustre un appareil d'accouplement hydrocinétique selon l'invention,
- la figure 2 est une vue de côté de la face de frottement d'une garniture annulaire de friction selon un premier mode de réalisation l'invention,
- la figure 2A est une vue de détail illustrant la zone d'assemblage par coopération de formes entre deux segments consécutifs de la garniture de friction,
- la figure 3 est une section de la garniture de la figure 2 selon le plan de coupe radial A-A qui illustre le profil du tronçon circulaire de refroidissement,
- la figure 4 est une demi-vue de côté de la face de frottement d'une garniture annulaire de friction selon un deuxième mode de réalisation,
- la figure 5 est une demi-vue de côté de la face de frottement d'une garniture annulaire de friction selon un troisième mode de réalisation,
- la figure 6 est une demi-vue de côté de la face de frottement d'une garniture annulaire de friction selon un quatrième mode de réalisation,
- la figure 7 est une demi-vue de côté de la face de frottement d'une garniture annulaire de friction selon un cinquième mode de réalisation.

Dans la description qui va suivre, des chiffres de référence identiques désignent des éléments identiques ou ayant des fonctions similaires.

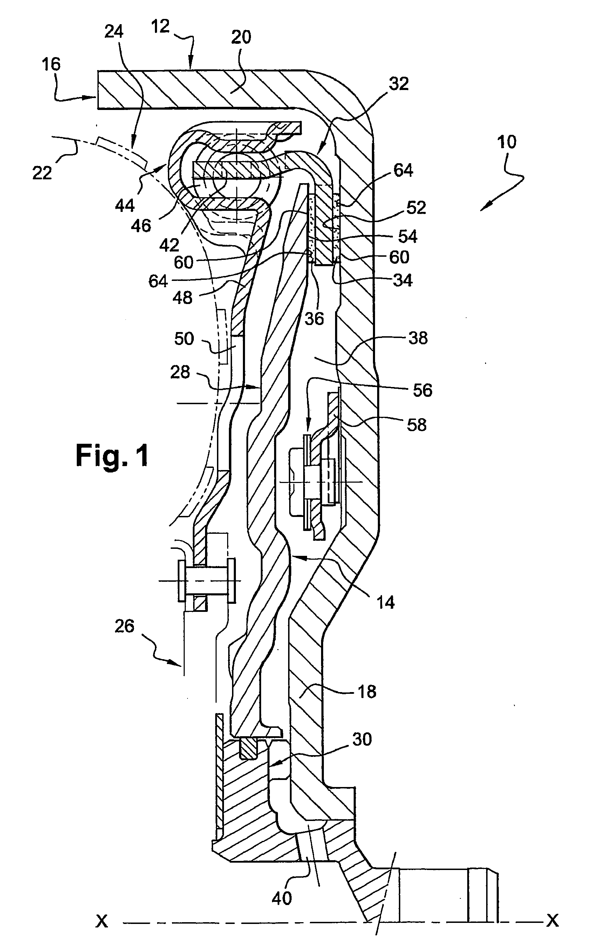

Par convention, les termes « avant », « arrière », « externe », « interne » désignent respectivement des éléments ou des positions orientés respectivement vers la droite, la gauche, le haut, ou le bas de la figure 1.

Selon une conception connue, par exemple du document FR-A-2.804.484 auquel on pourra se reporter pour plus de précisions, un appareil d'accouplement hydrocinétique 10 du type « bifaces » comporte, agencés dans un carter 12 étanche rempli d'huile, un convertisseur de couple et un embrayage de verrouillage 14, usuellement dénommé « lock-up ».

Le carter 12 constitue un élément menant et il est propre à être lié en rotation à un arbre menant, à savoir par exemple le vilebrequin (non représenté) du moteur à combustion interne dans le cas d'une application à un véhicule automobile.

Le carter 12, de forme générale annulaire, est constitué de deux demi-coquilles se faisant face et qui sont fixées de manière étanche à leur périphérie externe, usuellement par une opération de soudage.

Comme visible sur la figure 1, la première demi-coquille avant 16 est propre à être liée en rotation à l'arbre menant et elle est essentiellement constituée par une paroi avant 18 qui est globalement d'orientation transversale, c'est-à-dire qu'elle s'étend dans un plan radial perpendiculaire à l'axe X-X de l'appareil 10, et qui est prolongée à sa périphérie externe par une paroi cylindrique en forme de jupe annulaire 20 globalement d'orientation axiale.

La deuxième demi-coquille arrière (non représentée par souci de simplicité ainsi que la roue de réaction du convertisseur) est conformée de façon à définir une roue d'impulseur à aubes sur la face interne de cette demi-coquille.

Ces aubes font face aux aubes 22 d'une roue de turbine 24 fixée par rivetage, ou en variante par soudage, à un voile 26 de moyeu (non représenté) qui est lié en rotation à un arbre mené (non représenté), à savoir l'arbre d'entrée de la boîte de vitesses dans le cas d'une application à un véhicule automobile.

L'embrayage de verrouillage 14 comporte un piston 28 qui, avec une bague centrale 30, la paroi transversale avant 18 et un disque annulaire de friction 32, délimite une chambre 38 à volume variable, ou chambre de « lock-up », alimentée en huile sous pression par un canal 40 qui traverse la bague centrale 30.

Le disque de friction porte ici à fixation, par exemple par collage, sur chacune de ses faces transversales opposées, des garnitures de friction respectivement avant 34 et arrière 36 comportant, conformément à l'invention, l'une et/ou l'autre un réseau de rainures de refroidissement.

Le disque de friction 32 est implanté à la périphérie externe du piston 28 et présente à sa périphérie externe, radialement au-delà du piston 28, des pattes 42, avec une partie d'orientation axiale, pénétrant chacune dans une encoche, que présente une rondelle de guidage 44 à sa périphérie externe.

Le disque de friction 32 est ainsi lié en rotation, avec mobilité axiale, à la rondelle de guidage 44 avec interposition de ressorts à boudin 46 à action circonférentielle.

La rondelle 44 de guidage des ressorts 46 se prolonge radialement vers l'intérieur par un flasque annulaire d'orientation transversale 48 qui présente une série de trous 50 pour circulation de l'huile entre le piston 28 et la roue 24.

Ainsi, l'embrayage de verrouillage 14 comporte un amortisseur de torsion implanté en majeure partie entre la roue à turbine 24 et la paroi transversale 18 à la périphérie externe de la première coquille 16, avec un élément d'entrée et un élément de sortie.

L'élément d'entrée est constitué par le disque de friction 32 qui est susceptible d'être lié en rotation à la paroi transversale avant 18 du carter.

L'élément de sortie est constitué par la rondelle de guidage 44 qui est liée en rotation par son flasque 48 au voile 26 du moyeu, donc à la roue de turbine 24.

L'élément d'entrée est accouplé de manière élastique, ici par interposition circonférentielle de ressorts à boudin 46, à l'élément de sortie.

L'élément d'entrée, ici le disque 32 avec ses garnitures de friction 34, 36, est propre à être serré axialement de manière débrayable entre des portées de frottement situées en vis-à-vis, plus précisément une portée annulaire arrière 52 appartenant à la face interne de la paroi transversale avant 18, et une portée annulaire avant 54 appartenant au piston 28.

La roue de turbine 24 est entraînée en rotation par la roue d'impulseur grâce à la circulation d'huile contenue dans le carter étanche, puis après le démarrage du véhicule, on utilise l'embrayage de verrouillage 14 pour éviter les phénomènes de glissement entre les roues de turbine et d'impulseur qui interviennent au-delà d'un certain couple.

A cet effet, on obtient avec l'embrayage de verrouillage 14, une solidarisation directe, ou pontage, de l'arbre mené avec l'arbre menant, et cela par serrage des garnitures annulaires de friction 34, 36 et du disque de friction 32 entre le piston 28 et la paroi transversale avant 18, avec entraînement direct de l'arbre mené par la coquille de carter.

Pour desserrer l'embrayage, ou dépontage, on augmente alors la pression dans la chambre 38 à volume variable.

En position engagée de l'embrayage de verrouillage 14, c'est-à-dire lorsque les garnitures 34, 36 sont serrées, la chambre à volume variable 38 est dépressurisée. Cette chambre 38 est délimitée extérieurement par le disque 32 et les garnitures de friction 34, 36.

Le piston 28 et la paroi transversale avant 18 comportent à leur périphérie externe respectivement la portée de frottement 52, 54 constituant une surface de friction plane transversale avec lesquelles sont destinées à coopérer les garnitures de friction 34, 36 situées en vis-à-vis.

On notera que le piston 28 est ici lié en rotation à la paroi transversale avant 18 de la première demi-coquille 16 par des languettes élastiques 56 d'orientation tangentielle réparties régulièrement circonférentiellement, ces languettes 56 autorisant un mouvement axial du piston 28.

Les languettes 56 peuvent être attelées à la paroi transversale avant 18 par l'intermédiaire d'une pièce annulaire métallique 58, solidaire de la paroi transversale avant 18.

Pour l'attelage des languettes 56 au piston 28, on met en oeuvre des moyens de fixation de conception connue.

Les languettes 56 s'étendent dans le volume qui s'étend radialement entre les garnitures de friction 34, 36 et l'axe X-X de l'ensemble, c'est-à-dire dans la chambre à volume variable 38.

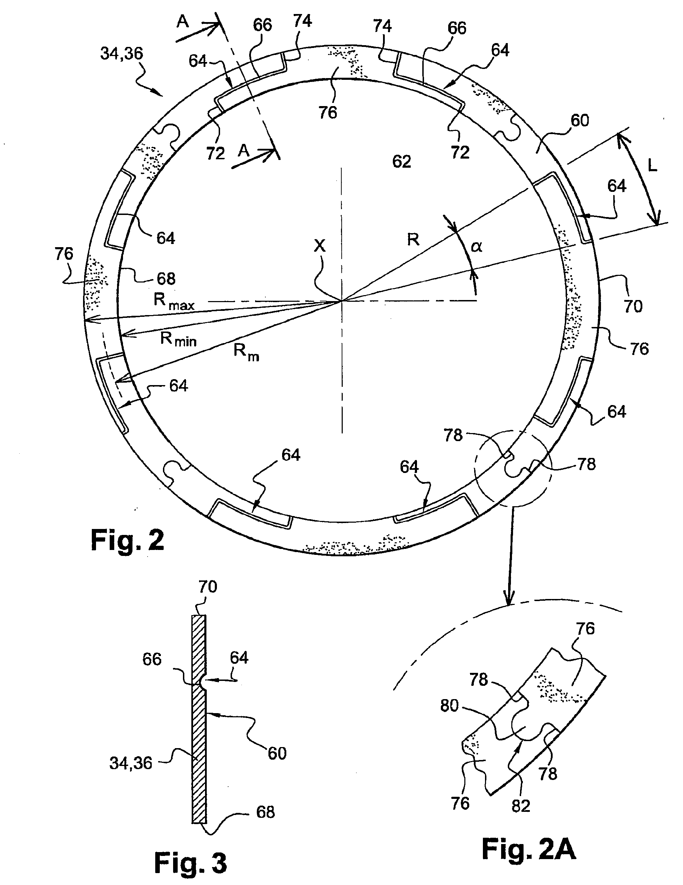

On décrira maintenant en détail un premier mode de réalisation d'une garniture annulaire de friction réalisée conformément aux enseignements de l'invention et illustré à la figure 2.

Cette garniture annulaire de friction, telle que la garniture avant 34 et/ou la garniture arrière 36, comporte sur au moins sa face latérale de frottement 60 un réseau 62 de rainures de refroidissement 64.

Le réseau 62 de rainures comporte un nombre « n » de rainures de refroidissement 64 qui est au moins égal à deux.

Le nombre « n » de rainures de refroidissement 64 est de préférence un nombre pair, en variante un nombre impair.

Plus précisément et comme visible à la figure 2, le réseau 62 comporte huit rainures de refroidissement 64 et chacune de ces rainures de refroidissement 64 comporte au moins un tronçon principal circulaire de refroidissement 66 qui est centré autour de l'axe de rotation X-X de l'appareil 10, qui est aussi l'axe de rotation de la garniture annulaire de friction 34, 36.

Chaque rainure de refroidissement 64 comporte ici un seul tronçon circulaire 66 dont le rayon « Rn » a une valeur qui est comprise entre celle « R min » du bord circulaire interne 68 de la face latérale de frottement 60 de la garniture et celle « R max » du bord circulaire externe 70 de la face latérale de frottement 60 de la garniture.

Conformément à l'invention, le rayon « Rn » est déterminé de manière à obtenir un refroidissement surfacique homogène de la portée de frottement située en vis-à-vis, telle que la portée de frottement 52 du carter 12 et/ou 54 du piston 28.

A cet effet, chacun des tronçons circulaires 66 des huit rainures de refroidissement 64 présente avantageusement une valeur de rayon « Rn » qui est différente de la valeur de rayon « Rn+1 » du tronçon circulaire de refroidissement 66 de la rainure 64 qui lui est consécutive.

Les valeurs des rayons « Rn » sont, en partant de la valeur de rayon « R1 » et en incrémentant l'indice « n » selon un sens de rotation (F), soit ici en sens inverse par rapport au sens trigonométrique, les valeurs suivantes en mm :

| Rmax | Rmin | R1 | R2 | R3 | R4 | R5 | R6 | R7 | R8 |
|---|---|---|---|---|---|---|---|---|---|
| 239 | 208 | 226 | 216 | 222 | 215 | 238 | 224 | 228 | 219 |

Ces valeurs des rayons « Rn » sont données uniquement à titre d'exemple de réalisation d'une garniture de friction selon l'invention.

En variante, chaque tronçon circulaire de refroidissement 66 présente une valeur de rayon « Rn » différente du rayon « Rn+1 » du tronçon circulaire de refroidissement 66 consécutif, et cela que ces tronçons circulaires consécutifs 66 appartiennent à une même rainure de refroidissement 64 ou à deux rainures de refroidissement 64 du réseau 62, lesdites rainures 64 pouvant être elles-mêmes consécutives ou non.

Les valeurs des rayons « Rn » des tronçons circulaires 66 des rainures de refroidissement 64 sont déterminées pour chaque application en fonction de la répartition des températures pour les différentes zones des portées de frottement à refroidir.

On a par exemple constaté pour certaine application que la température est généralement plus élevée dans la zone radialement externe de la portée de frottement que dans la zone radialement interne puisque l'échauffement y est plus important du fait de la vitesse de glissement qui est d'autant plus grande que le rayon est grand.

D'autre part, les déformations dues aux différentes pressions et aux forces centrifuges s'exerçant sur les différents composants induisent une pression de contact exercée sur la garniture est plus importante sur la partie radialement externe de ladite garniture que sur la partie radialement interne de ladite garniture. Ceci implique une génération de chaleur plus grande sur cette partie radialement externe que sur cette partie radialement interne.

Ainsi, on détermine les valeurs des rayons « Rn » de manière que la moyenne des valeurs des huit rayons « Rn » de l'ensemble des tronçons circulaires 66 que comporte la face de frottement 60 de la garniture 34, 36 soit sensiblement supérieure ou égale à la valeur du rayon moyen « Rm » de cette garniture annulaire de friction afin d'obtenir un meilleur refroidissement surfacique de la zone radialement externe de la portée de frottement.

Les huit rainures de refroidissement 64 du réseau 62 sont réparties circonférentiellement de manière régulière sur la face de frottement 60 de la garniture de friction.

Les tronçons circulaires de refroidissement 66 sont centrés sur l'axe de rotation X-X et s'étendent sur des secteurs angulaires égaux d'angle au centre « α », c'est-à-dire que les secteurs angulaires sont ici tous de même longueur « Ln ».

En variante, le tronçon circulaire 66 d'une rainure « n » de refroidissement 64 est de longueur « Ln », ou d'angle au centre « α », différent de la rainure « n+1 » de refroidissement 64 qui lui est consécutive.

Chaque rainure de refroidissement 64 comporte un tronçon intérieur de raccordement 72 qui relie une première extrémité circonférentielle du tronçon circulaire 66 au bord interne 68 de la garniture annulaire de friction 34, 36, et un tronçon extérieur de raccordement 74 qui relie la deuxième extrémité circonférentielle du tronçon circulaire 66 au bord externe 70 de la garniture annulaire de friction 34, 36.

En variante, le tronçon intérieur 72 de raccordement et/ou le tronçon extérieur 74 de raccordement relient un tronçon circulaire de refroidissement 66 à une des extrémités du tronçon circulaire de refroidissement 66 adjacent de manière à constituer une rainure de refroidissement 64 en forme d'escalier comportant au moins deux tronçons circulaires 66 de valeurs de rayons « Rn » différentes.

Les tronçons intérieur 72 et extérieur 74 de raccordement sont de préférence sensiblement rectilignes et s'étendent globalement radialement suivant un rayon centré sur l'axe de rotation X-X.

En variante, le tronçon intérieur 72 et/ou le tronçon extérieur 74 de raccordement s'étendent de manière à former un angle aigu compris entre 0° et 45° par rapport à un rayon centré sur l'axe de rotation X-X.

Dans le réseau 62 illustré à la figure 2, on notera qu'au tronçon extérieur 74 de raccordement ou au tronçon intérieur 72 de raccordement d'une rainure de refroidissement 66 succède pour la rainure de refroidissement 66 suivante soit un tronçon intérieur 72 de raccordement, soit un tronçon extérieur 74 de raccordement.

Lorsque la garniture de friction est entraînée en rotation suivant le sens de rotation (F) et que l'huile parcourt les tronçons successifs 72, 66, 74 d'une rainure de refroidissement 64 radialement de l'intérieur vers l'extérieur, cette rainure de refroidissement 64 est appelée rainure « positive » si l'huile parcourt le ou les tronçons circulaires 66 qu'elle comporte dans le même sens que le sens de rotation (F) et inversement elle est appelée rainure « négative » lorsque l'huile la parcourt en sens inverse du sens de rotation (F).

En fonction des applications, il est possible de déterminer le nombre de rainures positives et/ou négatives de refroidissement 66 du réseau 62 de rainures de refroidissement 64 de la garniture friction 34, 36 de manière à créer par exemple un effet « de pompage » ou d'entraînement de l'huile qui est notamment fonction de la vitesse de rotation relative de la face latérale 60 de frottement de la garniture par rapport à la portée de frottement située en vis-à-vis.

Au contraire, on peut neutraliser ou favoriser cet effet d'entraînement de l'huile selon que la garniture 34, 36 comporte soit autant de rainures positive que négative comme cela est le cas dans le mode de réalisation de la figure 2, soit plus de rainures positives que négatives et réciproquement.

La répartition circonférentielle des rainures positives et négatives de refroidissement 64 sur la face de frottement 60 de la garniture 34, 36 peut, ou non, présenter des symétries.

On notera que le débit de l'huile circulant dans les rainures de refroidissement 64 est proportionnel à la pression d'alimentation et à la vitesse de rotation, notamment à la vitesse de rotation différentielle entre le disque de friction 32 portant les garnitures 34, 36 et l'ensemble piston 28 - paroi transversale 18 du carter 12.

Le débit d'huile vers l'intérieur de la chambre à volume variable 38 augmente en fonction de la vitesse de glissement, de sorte que plus on glisse, plus on augmente le débit d'huile.

La garniture annulaire de friction 34, 36 est avantageusement constituée par assemblage de différentes pièces 76, ici au nombre de quatre, qui forment des secteurs montés solidaires en rotation.

A cet effet, chaque pièce ou secteur 76 de la garniture annulaire de friction 34, 36 comporte à ses extrémités, plus précisément sur chacun de ses bords 78 d'orientation radiale des moyens de formes complémentaires pour permettre un assemblage par coopération de formes entre deux pièces consécutives 76.

Comme mieux visible sur la figure 2A, les moyens d'assemblage consistent ici en une tête 80 ayant globalement une forme de oméga (Ω), qui est reçue dans un logement 82 de forme complémentaire. Dans ce cas, les rainures de refroidissement 64 sont de préférence réalisées de manière à ne pas s'étendre sur deux pièces consécutives.

Les valeurs des rayons « Rmin » et « Rmax » des pièces 76 en forme de secteurs de la garniture 34, 36 sont ici centrées sur l'axe de rotation X-X de sorte que la face de frottement 60 de la garniture présente radialement, entre ses bords interne 68 et externe 70, une largeur constante.

Comme visible à la figure 3, le tronçon circulaire 66 des rainures de refroidissement 64 qui est ouvert latéralement, présente en section selon le plan de coupe radial A-A un profil globalement en forme de. U, dont le fond est avantageusement de forme semi-circulaire.

Un tel profil en U de rainure 64 permet d'obtenir un bon débit et peut être réalisé aisément par pressage, même dans des feuilles de matériau présentant une grande dureté.

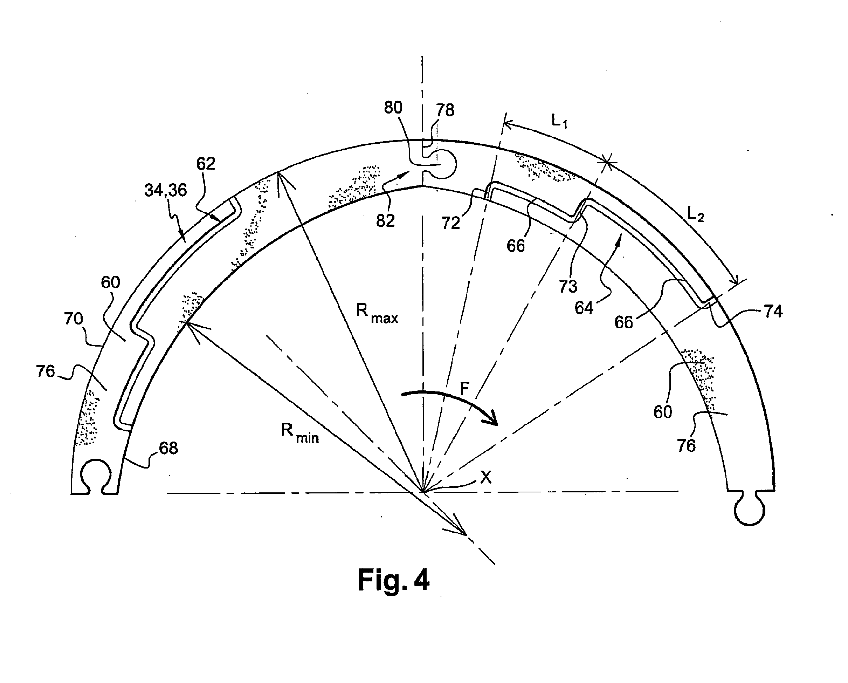

On décrira maintenant par comparaison avec la figure 2, une garniture annulaire de friction selon un deuxième mode de réalisation de l'invention tel qu'illustré à la figure 4.

Chaque rainure de refroidissement 64 du réseau 62 comporte ici deux tronçons circulaires de refroidissement 66 qui sont centrés sur l'axe de rotation X-X.

Ainsi, chaque tronçon circulaire de refroidissement 66 présente une valeur de rayon « Rn » différente du rayon « Rn+1 » du tronçon circulaire de refroidissement 66 consécutif, les tronçons circulaires consécutifs 66 appartenant à une même rainure de refroidissement 64.

Comme visible à la figure 4, la rainure 64 comporte outre les tronçons intérieur 72 et extérieur 74 de raccordement, un tronçon intermédiaire de raccordement 73 qui relie un premier tronçon circulaire de refroidissement 66 à une des extrémités d'un second tronçon circulaire de refroidissement 66 de manière à constituer une rainure de refroidissement 64 en forme générale d'escalier comportant au moins deux tronçons circulaires 66 successifs ayant des valeurs de rayon « Rn » différentes.

Les premier et second tronçons circulaires de refroidissement 66 sont de longueur « Ln » différente, respectivement « L1 » et « L2 », de sorte que ces tronçons 66 s'étendent sur des secteurs angulaires inégaux d'angle au centre « α » différent.

Afin de réduire le coût de production des pièces 76 en forme de secteurs de la garniture 34, 36, les valeurs des rayons « Rmin » et « Rmax » des pièces 76 sont ici sensiblement égales et seul l'un des rayons est centré sur l'axe de rotation X-X.

En effet, les pièces 76 sont obtenues par découpe d'une feuille de matériau dont on souhaite réduire autant que possible les chutes après découpe.

On comprendra que si l'on découpe dans une feuille deux pièces 76 présentant des valeurs des rayons « Rmin » et « Rmax » égales, il est dès lors possible de les « accoler » de manière à ne pas avoir entre chacune d'elle une bande de matière constituant une chute due à la différence entre les valeurs des rayons « Rmin » et « Rmax » comme cela était le cas auparavant pour le premier mode de réalisation illustré à la figure 2.

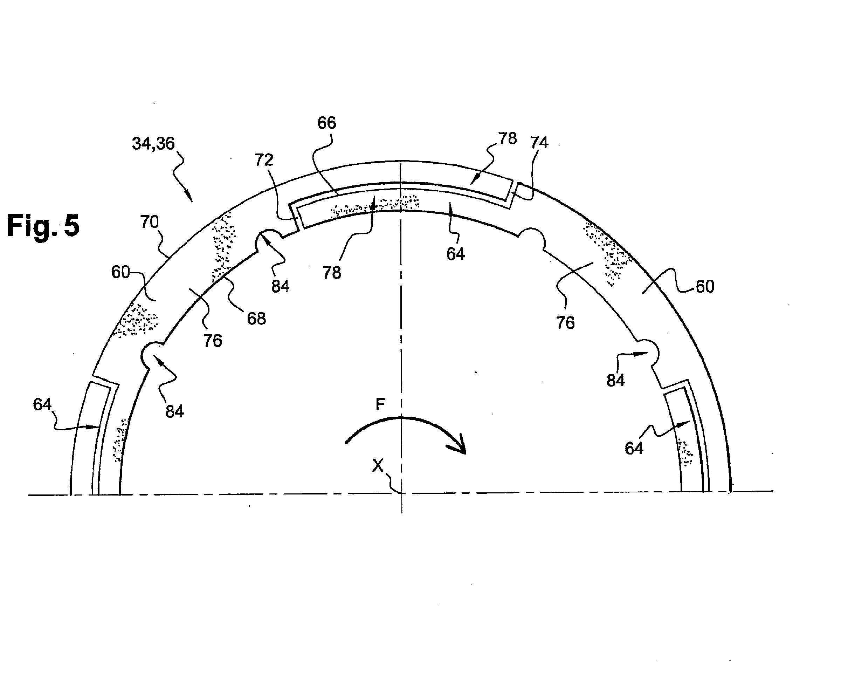

On décrira maintenant par comparaison avec la figure 2, une garniture annulaire de friction selon un troisième mode de réalisation de l'invention tel qu'illustré à la figure 5.

La garniture annulaire de friction 34, 36 est constituée par assemblage de différentes pièces 76 qui forment des secteurs montés solidaires en rotation d'un élément support tel que le disque de friction 32, de préférence par collage en variante par tout autre moyen approprié.

Chaque pièce ou secteur 76 de la garniture annulaire de friction 34, 36 comporte à chacune de ses extrémités, un bord 78 d'orientation radiale qui présente un profil étagé ou en « escalier » qui est de forme complémentaire du profil du bord 78 de la pièce 76 consécutive de manière à déterminer une rainure de refroidissement 64 après assemblage avec jeu des pièces 76.

Avantageusement, on supprime ainsi l'opération de pressage auparavant nécessaire pour réaliser les rainures 64.

Le fond axial de la rainure 64 est alors avantageusement délimité par le disque annulaire de friction 32 portant la garniture de friction 64.Le réseau 62 de la garniture de friction comporte plus de deux rainures de refroidissement 64 réalisées conformément à l'invention de manière à garantir un bon refroidissement en fonctionnement, même si l'une de ces rainures venait à être partiellement ou totalement obturée par un corps étranger.

Les valeurs des rayons « Rn » des tronçons circulaires 66 des rainures de refroidissement 64 sont déterminées en fonction des applications, ainsi si la portée de frottement refroidie par le réseau 62 de garnitures 64 présente une zone d'échauffement plus important par exemple dans sa partie radialement extérieure, on détermine alors la moyenne des valeurs des rayons « Rn » de l'ensemble des tronçons circulaires 66 de manière à refroidir plus particulièrement cette zone.

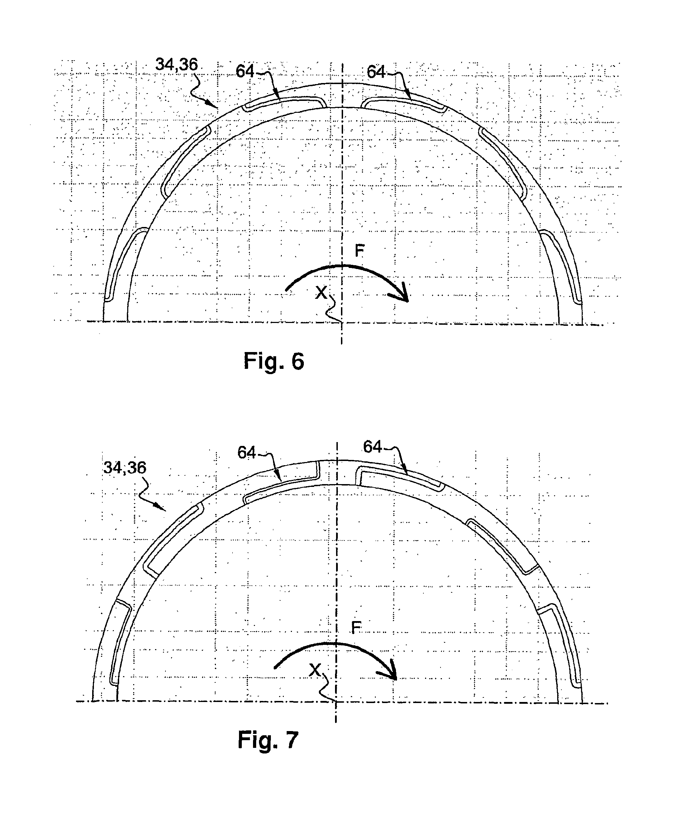

Dans une variante illustrée en figure 6, un résultat similaire est obtenu par des rainures 64 sensiblement en forme de spirale dont le pas est variable et décroît lorsque l'angle au centre α de ladite rainure croît. Ceci permet d'obtenir un temps de résidence de fluides plus long dans la partie radialement externe de la garniture. En effet, du fait du pas décroissant de la spirale que suit la rainure 64, cette dernière présente, dans la partie radialement externe de la garniture, une plus grande surface de refroidissement.

Dans une autre variante illustrée en figure 7, un résultat similaire est obtenu avec des rainures 64 présentant différentes largeurs, les plus larges étant situées principalement dans la partie radialement externe de la garniture. Ceci permet d'avoir des surfaces de refroidissement plus importantes pour les rainures présentant une plus grande largeur et donc d'améliorer les échanges thermiques dans cette partie de la garniture.

Bien entendu, la présente invention n'est pas limitée aux modes de réalisation décrits et représentés dans les figures.

En particulier, le nombre de rainures de refroidissement 64 dépend des applications, notamment du diamètre externe des garnitures annulaires de friction et des conditions de fonctionnement.

On a décrit ici des exemples de réalisation de l'invention appliqués à un appareil d'accouplement hydrocinétique 10 comportant un embrayage de verrouillage 14 bifaces, c'est à dire qui comporte un disque de friction 32 entre les portées 52, 54 du carter 12 et du piston 28.

Bien entendu, l'invention s'applique le cas échéant de manière analogue à tout type d'appareil d'accouplement hydrocinétique 10, tel qu'un appareil comportant un embrayage de verrouillage 14 de type monoface, c'est à dire sans disque de friction 32, ou encore un embrayage du type multidisque comportant une pluralité de disques de friction 32.

## Revendications

1. Appareil d'accouplement hydrocinétique (10), notamment pour véhicule automobile, du type comportant :
- un carter (12) contenant de l'huile, qui comporte une paroi sensiblement transversale (18) comprenant une portée de frottement (52) et qui est propre à être lié en rotation à un arbre menant,
- une roue de turbine (24) destinée à être liée en rotation à un arbre mené,
- un embrayage de verrouillage (14) du couplage des arbres menant et mené, intervenant entre la roue de turbine (24) et la paroi transversale (18) du carter (12), qui comporte un piston (28) comprenant une portée de frottement (54) pour lier de manière débrayable la roue de turbine (24) à la paroi transversale (18),
- au moins une garniture annulaire de friction (34, 36) qui est interposée axialement entre la portée de frottement (52) du carter (12) et la portée de frottement (54) du piston (28) et dont au moins une face latérale (60) de frottement présente un rayon moyen (Rm) et comporte un réseau (62) de rainures de refroidissement (64) des portées de frottement (52, 54), chaque rainure de refroidissement présentant une surface de refroidissement sur la face latérale (60) de frottement, **caractérisé en ce que** le réseau (62) de rainures comportant au moins deux rainures de refroidissement (64) est agencé de sorte qu'une somme des valeurs de surfaces de refroidissement situées radialement entre le rayon moyen (Rm) et un bord externe (70) de la face de frottement (60) soit plus importante qu'une somme des valeurs de surfaces de refroidissement situées radialement entre un bord interne (68) de la face de frottement (60) et le rayon moyen (Rm).

2. Appareil d'accouplement hydrocinétique (10), notamment pour véhicule automobile, du type comportant :
- un carter (12) contenant de l'huile, qui comporte une paroi sensiblement transversale (18) comprenant une portée de frottement (52) et qui est propre à être lié en rotation à un arbre menant,
- une roue de turbine (24) destinée à être liée en rotation à un arbre mené,
- un embrayage de verrouillage (14) du couplage des arbres menant et mené, intervenant entre la roue de turbine (24) et la paroi transversale (18) du carter (12), qui comporte un piston (28) comprenant une portée de frottement (54) pour lier de manière débrayable la roue de turbine (24) à la paroi transversale (18),
- au moins une garniture annulaire de friction (34, 36) qui est interposée axialement entre la portée de frottement (52) du carter (12) et la portée de frottement (54) du piston (28) et dont au moins une face latérale (60) de frottement comporte un réseau (62) de rainures de refroidissement (64) des portées de frottement (52, 54), le réseau (62) de rainures comportant au moins deux rainures de refroidissement (64) comportant chacune au moins un tronçon circulaire (66) de refroidissement qui est centré autour de l'axe de rotation (X-X) de l'appareil (10) et dont le rayon a une valeur, comprise entre celle du bord interne (68) et celle du bord externe (70) de la face de frottement (60), qui est déterminée de manière à obtenir un refroidissement surfacique homogène de la portée de frottement (62, 54) située en vis-à-vis **caractérisé en ce que** les valeurs des rayons (Rn) des tronçons circulaires (66) des rainures de refroidissement (64) sont déterminées de manière que la moyenne des valeurs des rayons (Rn) de l'ensemble des tronçons circulaires (66) que comporte la face de frottement (60) de la garniture (34, 36) soit supérieure ou égale à une valeur du rayon moyen (Rm) de cette garniture annulaire de friction.

3. Appareil selon la revendication 1, **caractérisé en ce que** les rainures de refroidissement comportent chacune au moins un tronçon circulaire (66) de refroidissement qui est centré autour de l'axe de rotation (X-X) de l'appareil (10) et dont le rayon a une valeur, comprise entre celle du bord interne (68) et celle du bord externe (70) de la face de frottement (60).

4. Appareil selon l'une des revendications 2 ou 3, **caractérisé en ce que** chaque tronçon circulaire (66) de refroidissement d'une rainure de refroidissement (64) présente une valeur de rayon (Rn) différente du tronçon circulaire (66) de refroidissement de la rainure (64) consécutive.

5. Appareil selon l'une des revendications 3 ou 4, **caractérisé en ce que** les valeurs des rayons (Rn) des tronçons circulaires (66) des rainures de refroidissement (64) sont déterminées de manière que la moyenne des valeurs des rayons (Rn) de l'ensemble des tronçons circulaires (66) que comporte la face de frottement (60) de la garniture (34, 36) soit supérieure ou égale à la valeur du rayon moyen (Rm).

6. Appareil selon l'une des revendications 2 à 5, **caractérisé en ce que** les tronçons circulaires (66) de refroidissement s'étendent sur des secteurs angulaires d'angle au centre (α) égaux.

7. Appareil selon l'une des revendications 2 à 6, **caractérisé en ce qu'**au moins une des rainures de refroidissement (64) comporte au moins un premier tronçon circulaire (66) et un second tronçon circulaire (66) de refroidissement de longueurs (Ln) non égales.

8. Appareil selon l'une des revendications précédentes, **caractérisé en ce que** le réseau (62) de rainures comporte un nombre (n) de rainures de refroidissement (64) qui sont réparties circonférentiellement de manière régulière sur la face de frottement (60) de la garniture de friction (34, 36).

9. Appareil selon la revendication 8, **caractérisé en ce que** le nombre (n) de rainures de refroidissement (64) est un nombre pair.

10. Appareil selon l'une quelconque des revendications précédentes, **caractérisé en ce que** chaque rainure de refroidissement (64) comporte un tronçon intérieur (72) de raccordement qui relie une extrémité circonférentielle d'un tronçon circulaire (66) de refroidissement au bord interne (78) de la garniture annulaire de friction (34, 36) et un tronçon extérieur (74) de raccordement qui relie l'autre extrémité circonférentielle du tronçon circulaire (66) de refroidissement au bord externe (70) de la garniture annulaire de friction (34, 36).

11. Appareil selon la revendication 10, **caractérisé en ce que** le tronçon intérieur (72) de raccordement et/ou le tronçon extérieur (74) de raccordement sont globalement rectilignes.

12. Appareil selon l'une des revendications 10 ou 11, **caractérisé en ce que** le tronçon intérieur (72) de raccordement et/ou le tronçon extérieur (74) de raccordement s'étendent globalement radialement suivant un rayon centré sur l'axe de rotation (x-x) de l'appareil de manière à former un angle aigu compris entre 0° et 45° par rapport à ce rayon.

13. Appareil selon l'une quelconque des revendications 10 à 12, **caractérisé en ce qu'**à un tronçon extérieur (74) de raccordement d'une rainure de refroidissement (64) succède pour la rainure de refroidissement (64) consécutive un tronçon intérieur (72) de raccordement ou un tronçon extérieur (74) de raccordement.

14. Appareil selon l'une quelconque des revendications 2 à 13, **caractérisé en ce qu'**une rainure de refroidissement (64) parcourue radialement de l'intérieur vers l'extérieur est dite « positive » si l'huile circule dans le tronçon circulaire (66) suivant le sens de rotation (F) de la garniture et est dite « négative » si elle circule en sens inverse et **en ce que** le réseau (62) comporte autant de rainure (64) de refroidissement « positive » que de rainure « négative ».

15. Appareil selon l'une quelconque des revendications 2 à 13, **caractérisé en ce qu'**une rainure de refroidissement (64) parcourue radialement de l'intérieur vers l'extérieur est dite « positive » si l'huile circule dans le tronçon circulaire (66) suivant le sens de rotation (F) de la garniture et est dite « négative » si elle circule en sens inverse et **en ce que** le réseau (62) comporte plus de rainures (64) de refroidissement « positives » que « négatives » ou réciproquement.

16. Appareil selon l'une quelconque des revendications précédentes, **caractérisé en ce que** la garniture annulaire de friction (34, 36) est constituée d'au moins deux pièces (76) formant des secteurs qui sont montées solidaires en rotation.

17. Appareil selon la revendication 16, **caractérisé en ce que** les rainures de refroidissement (64) sont réalisées de manière à ne pas s'étendre sur deux secteurs (76) consécutifs.

18. Appareil selon la revendication 16, **caractérisé en ce que** chaque rainure de refroidissement (64) est constituée à la faveur d'un jeu délimité après assemblage entre deux bords radiaux (78) de formes complémentaires appartenant chacun à une des deux pièces (76) adjacentes.

19. Appareil selon la revendication 18, **caractérisé en ce que** le bord interne (70) de la garniture de friction (34, 36) comporte des moyens de centrage tels que des encoches (84).

20. Appareil selon l'une des revendications précédentes, **caractérisé en ce qu'**au moins l'une des rainures de refroidissement présente une forme sensiblement en spirale présentant un pas variable en fonction d'un angle au centre α de ladite rainure de refroidissement.

21. Appareil selon la revendication 20, **caractérisé en ce qu'**une valeur du pas décroît au fur et à mesure qu'une valeur de l'angle au centre α croît.

22. Appareil selon l'une des revendications précédentes, **caractérisé en ce qu'**au moins l'une des rainures de refroidissement ayant une surface de refroidissement situé essentiellement entre le rayon moyen (Rm) et le bord externe (70) de la face de frottement présente une largeur supérieure de rainure que les autres rainures de refroidissement du réseau (62).

## Claims

1. Hydrokinetic coupling apparatus (10), in particular for a motor vehicle, of the type comprising:
- a casing (12) containing oil, which has a substantially transverse wall (18) comprising a rubbing surface (52) and which is able to be rotationally connected to a driving shaft,
- a turbine wheel (24) intended to be rotationally connected to a driven shaft,
- a lock-up clutch (14) for coupling the driving and driven shafts, acting between the turbine wheel (24) and the transverse wall (18) of the casing (12), which has a piston (28) comprising a rubbing surface (54) for disengageably connecting the turbine wheel (24) to the transverse wall (18),
- at least one annular friction lining (34, 36) that is interposed axially between the rubbing surface (52) of the casing (12) and the rubbing surface (54) of the piston (28) and at least one lateral rubbing face (60) of which has a mean radius (Rm) and comprises a network (62) of cooling grooves (64) for the rubbing surfaces (52, 54), each cooling groove having a cooling surface on the lateral rubbing face (60), **characterised in that** the network (62) of grooves comprising at least two cooling grooves (64) is arranged so that a sum of the values of cooling surfaces situated radially between the mean radius (Rm) and an external edge (70) of the rubbing face (60) is greater than a sum of the values of cooling surfaces situated radially between an internal edge (68) of the rubbing face (60) and the mean radius (Rm).

2. Hydrokinetic coupling apparatus (10), in particular for a motor vehicle, of the type comprising:
- a casing (12) containing oil, which has a substantially transverse wall (18) comprising a rubbing surface (52) and which is able to be rotationally connected to a driving shaft,
- a turbine wheel (24) intended to be rotationally connected to a driven shaft,
- a lock-up clutch (14) for coupling the driving and driven shafts, acting between the turbine wheel (24) and the transverse wall (18) of the casing (12), which has a piston (28) comprising a rubbing surface (54) for disengageably connecting the turbine wheel (24) to the transverse wall (18),
- at least one annular friction lining (34, 36) that is interposed axially between the rubbing surface (52) of the casing (12) and the rubbing surface (54) of the piston (28) and at least one lateral rubbing face (60) of which comprises a network (62) of cooling grooves (64) for the rubbing surfaces (52, 54), the network (62) of grooves comprising at least two cooling grooves (64) each comprising at least one circular cooling portion (66) that is centred around the rotation axis (X-X) of the apparatus (10) and whose radius has a value, between that of the internal edge (68) and that of the external edge (70) of the rubbing face (60), that is determined so as to obtain an even surface cooling of the rubbing surface (62, 54) situated opposite, **characterised in that** the values of the radii (Rn) of the circular portions (66) of the cooling grooves (64) are determined so that the average of the values of the radii (Rn) of all the circular portions (66) that the rubbing face (60) of the lining (34, 36) has is greater than or equal to a value of the mean radius (Rm) of this annual friction lining.

3. Apparatus according to claim 1, **characterised in that** the cooling grooves each comprise at least one circular cooling portion (66) that is centred around the rotation axis (X-X) of the apparatus (10) and whose radius has a value between that of the internal edge (68) and that of the external edge (70) of the friction face (60).

4. Apparatus according to one of claims 2 or 3, **characterised in that** each circular cooling portion (66) of the cooling groove (64) has a radius value (Rn) different from the circular cooling portion (66) of the consecutive groove (64).

5. Apparatus according to one of claims 3 or 4, **characterised in that** the values of the radii (Rn) of the circular portions (66) of the cooling grooves (64) are determined so that the average of the values of the radii (Rn) of all the circular portions (66) that the rubbing face (60) of the lining (34, 36) has is greater than or equal to the value of the mean radius (Rm).

6. Apparatus according to one of claims 2 to 5, **characterised in that** the circular cooling portions (66) extend over angular sectors with equal angles at the centre (α).

7. Apparatus according to one of claims 2 to 5, **characterised in that** at least one of the cooling grooves (64) comprises at least one first circular cooling portion (66) and one second circular cooling portion of unequal lengths (Ln).

8. Apparatus according to one of preceding claims, **characterised in that** the network (62) of grooves comprises a number (n) of cooling grooves (64) that are distributed circumferentially in a regular manner over the rubbing face (60) of the friction lining (34, 36).

9. Apparatus according to claim 8, **characterised in that** the number (n) of cooling grooves (64) is an even number.

10. Apparatus according to any one of the preceding claims, **characterised in that** each cooling groove (64) comprises an internal connecting portion (72) that connects a circumferential end of a circular cooling portion (66) to the internal edge (78) of the annular friction lining (34, 36) and an external connecting portion (74) that connects the other circumferential end of the circular cooling portion (66) to the external edge (70) of the annular friction lining (34, 36).

11. Apparatus according to claim 10, **characterised in that** the internal connection portion (72) and/or the external connecting portion (74) are roughly rectilinear.

12. Apparatus according to one of claims 10 or 11, **characterised in that** the internal connecting portion (72) and/or the external connecting portion (74) extend roughly radially along a radius centred on the rotation axis (X-X) of the apparatus so as to form an acute angle of between 0° and 45° with respect to this radius.

13. Apparatus according to any one of claims 10 to 12, **characterised in that** an external connecting portion (74) of a cooling groove (64) is, for the consecutive cooling groove (64), succeeded by an internal connecting portion (72) or an external connecting portion (74).

14. Apparatus according to any one of claims 2 to 13, **characterised in that** a cooling groove (64) run through radially from the inside to the outside is said to be "positive" if the oil flows in the circular portion (66) in the direction of rotation (F) of the lining and is said to "negative" if it flows in the opposite direction and **in that** the network (62) comprises as many "positive" cooling grooves (64) as there are "negative" grooves.

15. Apparatus according to any one of claims 2 to 13, **characterised in that** a cooling groove (64) run through radially from the inside to the outside is said to be "positive" if the oil flows in the circular portion (66) in the direction of rotation (F) of the lining and is said to "negative" if it flows in the opposite direction and **in that** the network (62) comprises more "positive" cooling grooves (64) than "negative" or vice versa.

16. Apparatus according to any one of the preceding claims, **characterised in that** the annular friction lining (34, 36) consists of at least two pieces (76) forming sectors that are mounted so as to be integral with respect to rotation.

17. Apparatus according to claim 16, **characterised in that** the cooling grooves (64) are produced so as not to extend over two consecutive sectors (76).

18. Apparatus according to claim 16, **characterised in that** each cooling groove (64) is formed by means of a clearance delimited after assembly between two radial edges (78) with complementary shapes each belonging to one of the two adjacent pieces (76).

19. Apparatus according to claim 18, **characterised in that** the internal edge (70) of the friction lining (34, 36) comprises centring means such as notches (84).

20. Apparatus according to one of the preceding claims, **characterised in that** at least one of the cooling grooves has a shape substantially in a spiral having a variable pitch as a function of an angle at the centre α of the said cooling groove.

21. Apparatus according to claim 20, **characterised in that** a value of the pitch decreases as a value of the angle at the centre α increases.

22. Apparatus according to one of the preceding claims, **characterised in that** at least one of the cooling grooves having a cooling surface situated essentially between the mean radius (Rm) and the external edge (70) of the rubbing face has a groove width greater than the other cooling grooves in the network (62).

## Patentansprüche

1. Hydrodynamischer Momentwandler (10), insbesondere für Kraftfahrzeuge, umfassend:
- ein Öl enthaltendes Gehäuse (12), das eine einen Reibbereich (52) umfassende in etwa quer ausgerichtete Wand (18) aufweist, und das geeignet ist, drehfest mit einer Antriebswelle verbunden zu werden,
- ein Turbinenrad (24), das dazu bestimmt ist, mit einer getriebenen Welle verbunden zu werden,
- eine zwischen dem Turbinenrad (24) und der Querwand (18) des Gehäuses (12) eingreifende Überbrückungskupplung (14) zur Kopplung der Antriebswelle und der getriebenen Welle, die einen Kolben (28) umfasst, der einen Reibbereich (54) aufweist, um in auskuppelbarer Weise das Turbinenrad (24) und die Querwand (18) zu verbinden,
- wenigstens einen ringförmigen Reibbelag (34, 36), der axial zwischen dem Reibbereich (52) des Gehäuses (12) und dem Reibbereich (54) des Kolbens (28) angeordnet ist, und von dem mindestens eine seitliche Reibfläche (60) einen mittleren Radius (Rm) und ein Netz (62) von Kühlnuten (64) der Reibbereiche (52, 54) aufweist, wobei jede Kühlnut auf der seitlichen Reibfläche (60) eine Kühloberfläche aufweist,
**dadurch gekennzeichnet,**
**dass** das Netz (62) von Nuten mit mindestens zwei Kühlnuten derart angeordnet ist, dass eine Summe der Werte von radial zwischen dem mittleren Radius (Rm) und einem äußeren Rand (70) der Reibfläche (60) gelegenen Kühloberflächen umfangreicher ist als eine Summe der Werte von radial zwischen einem inneren Rand (68) der Reibfläche (60) und dem mittleren Radius (Rm) gelegenen Kühloberflächen.

2. Hydrodynamischer Momentwandler (10), insbesondere für Kraftfahrzeuge, umfassend:
- ein Öl enthaltendes Gehäuse (12), das eine einen Reibbereich (52) umfassende in etwa quer ausgerichtete Wand (18) aufweist, und das geeignet ist, drehfest mit einer Antriebswelle verbunden zu werden,
- ein Turbinenrad (24), das dazu bestimmt ist, mit einer getriebenen Welle verbunden zu werden,
- eine zwischen dem Turbinenrad (24) und der Querwand (18) des Gehäuses (12) eingreifende Überbrückungskupplung (14) zur Kopplung der Antriebswelle und der getriebenen Welle, die einen Kolben (28) umfasst, der einen Reibbereich (54) aufweist, um in auskuppelbarer Weise das Turbinenrad (24) und die Querwand (18) zu verbinden,
- wenigstens einen ringförmigen Reibbelag (34, 36), der axial zwischen dem Reibbereich (52) des Gehäuses (12) und dem Reibbereich (54) des Kolbens (28) angeordnet ist, und von dem mindestens eine seitliche Reibfläche (60) ein Netz (62) von Kühlnuten (64) der Reibbereiche (52, 54) aufweist, wobei das Netz (62) von Nuten mindestens zwei Kühlnuten umfasst, die jeweils mindestens einen kreisförmigen Kühlabschnitt (66) aufweisen, der um die Rotationsachse (X-X) des Wandlers (10) zentriert ist und dessen Radius einen Wert hat, der zwischen dem des inneren Randes (68) und dem des äußeren Randes (70) der Reibfläche (60) liegt, und der derart bestimmt ist, eine homogene Oberflächenkühlung der gegenüber gelegenen Reibbereiche (52, 54) zu erhalten,
**dadurch gekennzeichnet,**
**dass** die Werte der Radien (Rn) der kreisförmigen Abschnitte (66) der Kühlnuten (64) derart bestimmt sind, dass der Durchschnitt der Werte der Radien (Rn) der Gruppe von kreisförmigen Abschnitten (66), die die Reibfläche (60) des Belags (34, 36) aufweist, größer als oder gleich einem Wert des mittleren Radius dieses ringförmigen Reibbelags ist.

3. Momentwandler nach Anspruch 1, **dadurch gekennzeichnet, dass** die Kühlnuten jeweils mindestens einen kreisförmigen Kühlabschnitt (66) aufweisen, der um die Rotationsachse (X-X) des Wandlers (10) zentriert ist und dessen Radius einen Wert hat, der zwischen dem des inneren Randes (68) und dem des äußeren Randes (70) der Reibfläche (60) liegt,

4. Momentwandler nach Anspruch 2 oder 3, **dadurch gekennzeichnet, dass** jeder kreisförmige Kühlabschnitt (66) einer Kühlnut (64) einen Radius (Rn) aufweist, der verschieden ist von dem des kreisförmigen Kühlabschnitts (66) der nachfolgenden Nut (64).

5. Momentwandler nach Anspruch 3 oder 4, **dadurch gekennzeichnet, dass** die Werte der Radien (Rn) der kreisförmige Abschnitt (66) der Kühlnuten (64) derart bestimmt sind, dass der Durchschnitt der Werte der Radien (Rn) der Gruppe von kreisförmigen Abschnitten (66), die die Reibfläche (60) des Belags (34, 36) aufweist, größer oder gleich einem Wert des mittleren Radius (Rm) ist.

6. Momentwandler nach einem der Ansprüche 2 bis 5, **dadurch gekennzeichnet, dass** die kreisförmigen Kühlabschnitte (66) sich über Winkelsektoren mit gleichen Zentralwinkeln (α) erstrecken.

7. Momentwandler nach einem der Ansprüche 2 bis 6, **dadurch gekennzeichnet, dass** mindestens eine Kühlnut (64) wenigstens einen ersten kreisförmigen Kühlabschnitt (66) und einen zweiten Kühlabschnitt (66) mit unterschiedlichen Längen (Ln) aufweist

8. Momentwandler nach einem der vorherigen Ansprüche, **dadurch gekennzeichnet, dass** das Netz von Nuten eine Anzahl (n) von Kühlnuten (64) aufweist, die in Umfangsrichtung regelmäßig über die Reibfläche (60) des Belags (34, 36) verteilt sind.

9. Momentwandler nach Anspruch 8, **dadurch gekennzeichnet, dass** die Anzahl (n) eine gerade Anzahl ist.

10. Momentwandler nach einem der vorherigen Ansprüche, **dadurch gekennzeichnet, dass** jede Kühlnut (64) einen inneren Anschlussabschnitt (72), der ein Umfangsende eines kreisförmigen Kühlabschnitts (66) mit dem inneren Rand (78) des ringförmigen Reibbelags (34, 36) verbindet, und einen äußeren Anschlussabschnitt (74), der das andere Umfangsende des kreisförmigen Kühlabschnitts (66) mit dem äußeren Rand (70) des ringförmigen Reibbelags (34, 36) verbindet, aufweist.

11. Momentwandler nach Anspruch 10, **dadurch gekennzeichnet, dass** der innere Anschlussabschnitt (72) und/oder der äußere Anschlussabschnitt (74) im wesentlichen geradlinig sind.

12. Momentwandler nach Anspruch 10 oder 11, **dadurch gekennzeichnet, dass** der innere Anschlussabschnitt (72) und/oder der äußere Anschlussabschnitt (74) sich im wesentlichen radial entlang eines um die Rotationsachse (X-X) des Wandlers (10) zentrierten Radius erstreckt, um im Verhältnis zu diesem Radius einen spitzen Winkel zwischen 0° und 45° zu bilden.

13. Momentwandler nach einem der Ansprüche 10 bis 12, **dadurch gekennzeichnet, dass** auf einen äußeren Anschlussabschnitt (74) einer Kühlnut (64) für die nachfolgende Kühlnut (64) ein innerer Anschlussabschnitt (72) oder ein äußerer Anschlussabschnitt (74) folgt.

14. Momentwandler nach einem der Ansprüche 2 bis 13, **dadurch gekennzeichnet,dass** eine radial von innen nach außen durchlaufene Kühlnut (64) als "positiv" bezeichnet wird, wenn das Öl in dem kreisförmigen Abschnitt (66) in dem Rotationssinn (F) des Belags zirkuliert, und als "negativ" bezeichnet wird, wenn es im umgekehrten Sinn zirkuliert, und dass das Netz (62) ebenso viele "positive" wie "negative" Kühlnuten (64) aufweist.

15. Momentwandler nach einem der Ansprüche 2 bis 13, **dadurch gekennzeichnet, dass** eine radial von innen nach außen durchlaufene Kühlnut (64) als "positiv" bezeichnet wird, wenn das Öl in dem kreisförmigen Abschnitt (66) in dem Rotationssinn (F) des Belags zirkuliert, und als "negativ" bezeichnet wird, wenn es im umgekehrten Sinn zirkuliert, und dass das Netz (62) mehr "positive" als "negative" Kühlnuten (64) aufweist oder umgekehrt.

16. Momentwandler nach einem der vorherigen Ansprüche, **dadurch gekennzeichnet, dass** der ringförmige Reibbelag (34, 36) aus mindestens zwei Sektoren bildenden Stücken (76) besteht, die drehfest montiert sind.

17. Momentwandler nach Anspruch 16, **dadurch gekennzeichnet, dass** die Kühlnuten (64) derart ausgeführt sind, dass sie sich nicht über zwei aufeinander folgende Sektoren (76) erstrecken.

18. Momentwandler nach Anspruch 16, **dadurch gekennzeichnet, dass** jede Kühlnut (64) begünstigt durch ein Spiel gebildet ist, das nach dem Zusammensetzen zwischen zwei radialen Rändern (78) mit komplementären Formen, die jeweils zu einem der beiden benachbarten Teile (76) gehören, begrenzt ist.

19. Momentwandler nach Anspruch 18, **dadurch gekennzeichnet, dass** der innere Rand (70) des Reibbelags (34, 36) Zentrierungsmittel, wie Auskerbungen (84), aufweist.

20. Momentwandler nach einem der vorherigen Ansprüche, **dadurch gekennzeichnet, dass** wenigstens eine Kühlnut eine in etwa spiralförmige Form aufweist, die in Abhängigkeit eines Winkels (α) einen variablen Abstand vom Zentrum zu der besagten Kühlnut aufweist.

21. Momentwandler nach Anspruch 20, **dadurch gekennzeichnet, dass** ein Wert des Abstandes in dem Maße abnimmt, wie ein Wert des Winkels (α) im Zentrum zunimmt.

22. Momentwandler nach einem der vorherigen Ansprüche, **dadurch gekennzeichnet , dass** wenigstens eine der Kühlnuten, die eine Kühloberfläche hat, die im wesentlichen zwischen dem mittleren Radius (Rm) und dem äußeren Rand (70) der Reibfläche liegt, eine größere Nutlänge aufweist als die anderen Kühlnuten des Netzes (62).
